# EUROPÄISCHE PATENTSCHRIFT

(11) **EP 0 606 535 B1**
(45) Veröffentlichungstag und Bekanntmachung des Hinweises auf die Patenterteilung: **17.05.1995**
(21) Anmeldenummer: 93115938.8
(22) Anmeldetag: 02.10.1993
(51) Int. Cl.: B01J 35/06, D04B 21/12, C01B 21/26

(54) **Gewirk aus edelmetallhaltigen Drähten und Verfahren für seine Herstellung**
Knitted fabric of noble metal wires and process for its manufacture
Tricot de fils à base de métaux précieux et son procédé de fabrication

(30) Priorität: 14.01.1993 DE 4300791
(43) Veröffentlichungstag der Anmeldung: 20.07.1994
(73) Patentinhaber: W.C. Heraeus GmbH, D-63450 Hanau (DE)
(72) Erfinder: Gorywoda, Marek, Dr., D-63452 Hanau (DE); Hörmann, Michael, Dr., D-63776 Mömbris (DE); Lindenmayer, Günter, D-63619 Bad Orb (DE); Lupton, David Francis, Dr., D-63571 Gelnhausen (DE); Streb, Bruno, Dr., D-63579 Freigericht (DE)
(74) Vertreter: Kühn, Hans-Christian

(56) Entgegenhaltungen:
- EP-A- 0 504 723
- WO-A-92/02301
- FR-A- 2 433 975
- US-A- 3 874 645

## Beschreibung

Die Erfindung betrifft ein Gewirk aus edelmetallhaltigen Drähten sowie ein Verfahren für die maschinelle Herstellung gasdurchlässiger, gewirkter Netze aus edelmetallhaltigen Drähten mittels einer Wirkmaschine.

Maschenware aus edelmetallhaltigen Drähten und Verfahren für ihre Herstellung sind seit langem bekannt. Beispielsweise werden für die Katalyse der Ammoniak-verbrennung zur Salpetersäureherstellung Katalysator-Netze eingesetzt, die aus Platin/Rhodium-Drähten mit Dicken zwischen 60 und 120 »m bestehen. In den entsprechenden Verbrennungsanlagen werden die Katalysator-Netze beispielsweise quer zur Strömungsrichtung des katalytisch umzusetzenden Ammoniak-Gases eingesetzt. Da der bei der Katalyse erzielte Umsatz im allgemeinen von der Größe der mit dem katalytisch wirkenden Material belegten, freien Oberfläche abhängt, zeichnen sich die Katalysatornetze durch eine möglichst große Oberfläche aus. Gleichzeitig wird aber verlangt, daß die Gasströmung möglichst wenig behindert wird, daß also der Strömungswiderstand möglichst klein ist.

Üblicherweise werden diese Katalysator-Netze aus den jeweiligen Edelmetall-Drähten durch Weben in Bahnen gefertigt und anschließend auf die gewünschten Abmessungen zurechtgeschnitten. Bei einem Gewebe bilden die sich kreuzenden Metall-Drähte jedoch nur eine zweilagige Maschenstruktur. Es hat sich gezeigt, daß eine derartige Maschenware einem Gasstrom einen im Verhältnis zur bereitgestellten Oberfläche relativ großen Widerstand entgegensetzt. Weiterhin Ist das Weben derartiger Katalysatornetze durch das notwendige Aufrüsten der Webstühle relativ zeitaufwendig und kann auch aufgrund der beschränkten Duktilität der Edelmetall-Drähte im Vergleich zu Textilfasern nur langsam vor sich gehen.

In der EP-A1 03 64 153 ist ein Katalysatornetz und ein Verfahren beschrieben, das diese Nachteile vermeiden soll. Bei dem dort vorgeschlagenen Verfahren zur Herstellung von Netzen aus Edelmetall-Legierungen, insbesondere für die katalytische Ammoniakverbrennung und die Edelmetall-Rückgewinnung, werden die Edelmetall-Legierungs-Drähte zusammen mit einem Hilfsfaden aus natürlichen Fasern oder einem Kunststoff auf einer Strickmaschine verstrickt. Durch die Schlaufenbildung beim Verstricken entsteht eine dreilagige Maschen-Struktur, die im Vergleich zum Gewebe, bei gleichem Flächengewicht eine größere freie Oberfläche bildet. Bei diesem Verfahren ist aber ein Verstricken von reinen Edelmetall-Legierungs-Drähten ohne Hilfsfaden nicht möglich, da die Drähte beim Strickvorgang brechen. Das Mitstricken des Hilfsfadens hat jedoch den Nachteil, daß dieser vor dem Einsatz der Netze wieder entfernt werden muß.

Ein ähnliches Verfahren zur Herstellung von gasdurchlässigen Netzen aus Edelmetallen durch Stricken von Drähten aus Platin- oder Palladium-Legierungen auf Flachstrickmaschinen wird in der DE-C1 42 06 199 vorgeschlagen. Auch die Anwendbarkeit dieses Verfahrens ist jedoch durch die Festigkeit und Duktilität der edelmetallhaltigen Drähte begrenzt, so daß es nur zum Verstricken von Drähten aus bestimmten Platin-Rhodium-, Platin-Palladium-Rhodium, Palladium-Nickel-, Palladium-Kupfer- und Palladium-Nickel-Kupfer-Legierungen mit Durchmessern zwischen 50 bis 120 »m und Zugfestigkeiten zwischen 900 und 1050 N/mm² geeignet ist.

Allgemein sind mit den bekannten Strickverfahren mittels Flachstrickmaschinen nur relativ grobmaschige und daher eine geringe spezifische Oberfläche, bezogen auf das Volumen der Maschenware, aufweisende und mechanisch labile Maschenstrukturen herstellbar. Zwar können mittels Rundstricken auch feinmaschigere Metallnetze hergestellt werden, deren Bahnbreiten sind aber, bedingt durch die zur Zeit verfügbaren Rundstrickmaschinen, auf weniger als 3 m beschränkt.

Ein gattungsgemäßes Gewirk und ein Verfahren zu seiner Herstellung ist in der WO 92/02301 beschrieben. Daraus sind mittels einer Kettenwirkmaschine mit offener Trikot-Bindung ausgebildete Katalysator- und Rückgewinnungsnetze aus edelmetallhaltigen Drähten bekannt.

Ähnlich wie beim Stricken erfolgt auch beim Wirken die Drahtverschlingung unter Ausbildung einer mindestens 3-lagigen Maschenstruktur, mit der im Vergleich zum Weben bei gleichem Flächengewicht eine größere Oberfläche erzielt werden kann. Mit den bekannten Wirkverfahren sind jedoch nur verhältnismäßig lockere Netze mit geringer Steifigkeit herstellbar. Insbesondere zeichnet sich das in offener Trikotbindung ausgebildetete Gewirk durch eine verhältnismäßig geringe Formbeständigkeit und leichte Verschiebbarkeit aus und weist eine relativ geringe spezifische Oberfläche, bezogen auf das von dem Gewirk eingenommene Volumen, auf. Zur Verstärkung der offenen Trikotbindung werden in der WO 92/02301 relativ aufwendige Kombinationsbindungen, die beispielsweise mittels Raschel oder Jacquard-Wirktechniken herstellbar sind, vorgeschlagen. Aufgrund der im Vergleich zu textilen Fasern geringen Zugund Biegefestigkeiten sowie Duktilitäten der edelmetallhaltigen Drähte sind jedoch Maschenbindungen, die sehr hohe Festigkeitsanforderungen an die Drähte stellen nur eingeschränkt bzw. nur mit langsamer Wirkgeschwindigkeit herstellbar. In einer bevorzugten Ausführungsform werden die edelmetallhaltigen Drähte daher zusammen mit einem Hilfsfaden aus Kupfer oder oder mit synthetischen Fasern verwirkt oder in einer alternativen Verfahrensweise beim Wirken mit Schmiermittel überzogen. Dadurch soll der Draht vor möglichen mechanischen Beschädigungen bewahrt werden.

Der vorliegenden Erfindung liegt die Aufgabe zugrunde, ein feinmaschiges und eine gute mechanische Stabilität aufweisendes Gewirk aus edelmetallhaltigen Drähten mit hohen spezifischen Oberflächen, sowie ein einfaches Verfahren für seine Herstellung anzugeben.

Diese Aufgabe wird hinsichtliches des Gewirkes erfindungsgemäß dadurch gelöst, daß die edelmetallhaltigen Drähte unter Ausbildung geschlossener Maschen verwirkt sind, wobei das Gewirk mindestens 14 Maschen pro Zoll (14 Maschen pro 2.54 cm) aufweist, und wobei bei mindestens einer der das Gewirk bildenden Maschenbindungen die Unterlegung der edelmetallhaltigen Drähte über mindestens 3 Maschenabstände erfolgt.

Als Maschen werden im folgenden ineinanderhängende Fadenschleifen verstanden, die an ihren oberen und unteren Umkehrstellen durch andere Fadenschleifen in ihrer Form gehalten werden. Der Maschenabstand ergibt sich beispielsweise aus der kürzesten Verbindung der oberen Umkehrstellen. Als Maschenreihen werden die seitlich zueinander benachbarten Maschen bezeichnet, während die sogenannten Maschenstäbchen durch die in den benachbarten Maschenreihen übereinander angeordneten Fadenschleifen gebildet werden. Durch die Legung des Drahtes von einer Fadenschleife zu der Umkehrstelle einer neu zu bildenden Masche werden benachbarte Maschenreihen miteinander verbunden. Bei einer Unterlegung des Drahtes derart, daß nicht nur Maschenreihen, sondern auch Maschenstäbchen miteinander verbunden werden, entsteht ein Gewirk als flächige Struktur miteinander verbundener Maschen. Es hat sich gezeigt, daß Gewirk mit ausreichender mechanischer Stabilität erhalten wird, wenn bei mindestens einer der das Gewirk bildenden Maschenbindungen die Unterlegung der edelmetallhaltigen Drähte über mindestens 3 Maschenabstände erfolgt. Dadurch erhält das Gewirk in Verbindung mit seiner Ausgestaltung mit geschlossenen Maschen eine hohe Längs- und Querstabilität, die seine spätere Handhabung bei der Weiterverarbeitung oder beim Einsatz erleichtert. Darüberhinaus wird durch die Unterlegung über mindestens 3 Nadelteilungen ein dichtes Gewirk mit hoher Flächendichte erhalten. Es hat sich als notwendig erwiesen, auch bei Kombinationen mehrerer Maschenbindungen in einem Gewirk, beispielsweise um dessen Eigenschaften, wie Festigkeit, Dehnbarkeit, Elastizität oder Flächengewicht, zu erhöhen, mindestens bei einer der Maschenbindungen die Unterlegung der edelmetallhaltigen Drähte über mindestens 3 Maschenabstände vorzusehen.

Die Ausbildung des Gewirkes mit geschlossenen Maschen verleiht diesem eine hohe mechanische Stabilität, die dessen Herstellung und dessen Handhabung bei der Weiterverarbeitung und beim konkreten Einsatz erleichtert.

Durch Einstellen der Maschenzahl auf mindestens 14 Maschen pro Zoll (14 Maschen pro 2.54 cm) erhält das Gewirk eine feinmaschige Struktur, die die Erzeugung besonders hoher Flächengewichte ermöglicht. In Verbindung mit der durch das Wirken erzeugten, mindestens dreilagigen Maschenstruktur weist das Gewirk eine besonders hohe spezifische Oberfläche, bezogen auf das vom Gewirk eingenommene Volumen, auf.

Als besonders vorteilhaft im Hinblick auf eine feinmaschige Struktur hat sich ein Gewirk erwiesen, das eine Maschenzahl im Bereich zwischen 18 Maschen pro Zoll bis 32 Maschen pro Zoll (18 bis 32 Maschen pro 2.54 cm) auweist.

Insbesondere hat sich ein Gewirk bewährt, bei dem bei mindestens einer der das Gewirk bildenden Maschenbindungen die Unterlegung der edelmetallhaltigen Drähte über 4 Maschenabstände erfolgt. Gewirke mit einer derartigen Legung der edelmetallhaltigen Drähte weisen, insbesondere bei kombinierten Maschenbindungen, eine außergewöhnlich hohe Quer- und Längsstabilität und besonders hohe Flächengewichte auf.

Vorteilhafterweise besteht das Gewirk aus edelmetallhaltigen Drähten mit Durchmessern zwischen 50 »m und 200 »m. Insbesondere bei Gewirken, die überwiegend Platin enthalten, hat sich der Einsatz von Drähten, mit Durchmessern zwischen 60 »m und 76 »m als günstig erwiesen, wogegen bei Palladium-haltigen Drähten uach dickere Drahtdurchmesser eingesetzt werden.

Hinsichtlich des Verfahrens wird die oben angegebene Aufgabe erfindungsgemäß dadurch gelöst, daß die edelmetallhaltigen Drähte mittels einer Kettenwirkmaschine, deren Nadelteilung so eingestellt wird, daß Gewirk mit mindestens 14 Maschen pro Zoll (14 Maschen pro 2.54 cm) erhalten wird, unter Ausbildung geschlossener Maschen verwirkt werden, wobei bei mindestens einer der das Gewirk bildenden Maschenbindungen die Unterlegung der edelmetallhaltigen Drähte über mindestens 3 Nadelteilungen erfolgt.

Die Ausbildung des Gewirkes mit geschlossenen Maschen verleiht diesem eine hohe mechanische Stabilität, die wiederum beim Kettenwirken selbst erforderlich ist, um die hohen Warenabzugskräfte, wie sie, insbesondere bei der Herstellung breiter Bahnen, zum Arbeiten eines festen und stärkeren Warenbahn erforderlich sind, aufzunehmen. Weiterhin erleichtert die so erzielbare hohe mechanische Festigkeit und Stabilität des Gewirkes dessen Handhabung bei der Weiterverarbeitung und beim konkreten Einsatz. Überraschenderweise hat es sich gezeigt, daß die Anforderungen an die Festigkeit und Duktilität der edelmetallhaltigen Drähte beim Herstellen geschlossener Maschen mittels Kettenwirken von Standard-Ware erfüllt wird, so daß in dieser Hinsicht keine Einschränkungen des erfindungsgemäßen Verfahrens festgestellt wurden.

Durch Einstellen der Nadelteilung der Kettenwirkmaschine auf mindestens 14 Maschen pro Zoll wird eine feinmaschige Struktur erzeugt, die die Herstellung von Gewirken mit besonders hohen Flächengewichten ermöglicht. In Verbindung mit der durch das Wirken erzeugten, mindestens dreilagigen Maschenstruktur kann so ein Gewirk mit besonders hoher spezifischer Oberfläche, bezogen auf das vom Gewirk eingenommene Volumen, erhalten werden.

Es hat sich gezeigt, daß Gewirk mit ausreichender Stabilität erhalten wird, wenn bei mindestens einer der das Gewirk bildenden Maschenbindungen die Unterlegung der edelmetallhaltigen Drähte über mindestens 3 Nadelteilungen erfolgt. Dadurch erhält das Gewirk in Verbindung mit seiner Ausgestaltung mit geschlossenen Maschen eine hohe Längs- und Querstabilität, die wiederum sowohl das Kettenwirken selbst als auch die spätere Handhabung des Gewirkes erleichtert. Darüberhinaus wird durch die Unterlegung über mindestens 3 Nadelteilungen ein dichtes Gewirk mit hoher Flächendichte erhalten. Es hat sich als notwendig erwiesen, auch bei Kombinationen mehrerer Maschenbindungen In einem Gewirk, beispielsweise um dessen Eigenschaften, wie Festigkeit, Dehnbarkeit, Elastizität oder Flächengewicht, zu erhöhen, mindestens bei einer der Maschenbindungen die Unterlegung der edelmetallhaltigen Drähte über mindestens 3 Nadelteilungen vorzusehen.

Vorteilhafterweise wird beim Kettenwirken an den Drähten eine im wesentlichen gleichmäßige Spannkraft im Bereich zwischen 50 mN und 300 mN, vorzugsweise zwischen 70 mN und 150 mN angelegt. Diese Spannungkräfte gewährleisten ein sicheres Abschlagen der auf den Nadel spitzen der Kettenwirkmaschine befindlichen Maschenschleifen, ohne eine übermäßige Belastung der edelmetallhaltigen Drähte und deren Brechen befürchten zu müssen und sie erlauben die Ausbildung eines festen, stabilen Gewirkes. Dabei wird zur Herstellung eines möglichst dichten Gewirkes der Warenabzug klein gehalten.

Als besonders vorteilhaft im Hinblick auf eine feinmaschige Struktur bei gleichzeitig möglichst geringem Kraftaufwand beim Abziehen des Gewirkes von den Nadeln der Kettenwirkmaschine hat sich ein Verfahren erwiesen, bei dem die Kettenwirkmaschine mit einer Nadelteilung im Breich zwischen 18 Maschen pro Zoll bis 32 Maschen pro Zoll (18 bis 32 Maschen pro 2.54 cm) eingestellt wird.

Es wird ein Verfahren bevorzugt, bei dem bei mindestens einer der das Gewirk bildenden Maschenbindungen die Unterlegung der edelmetallhaltigen Drähte über 4 Nadelteilungen erfolgt. Mit einer derartigen Legung der edelmetallhaltigen Drähte sind, insbesondere bei kombinierten Maschenbindungen, Gewirke mit einer außergewöhnlich hoher Quer- und Längsstabilität und besonders hohen Flächengewichten herstellbar, ohne daß die Drähte beim Legen übermäßig mechanisch beansprucht werden.

Bewährt haben sich edelmetallhaltige Drähte mit Durchmesser zwischen 50 »m und 200 »m. Insbesondere zur Herstellung von Maschenware, die überwiegend Platin enthält, hat sich der Einsatz von Drähten, mit Durchmessern zwischen 60 »m und 76 »m als günstig erwiesen, wogegen bei Palladium-haltigen Drähten auch dickere Drahtdurchmesser bevorzugt eingesetzt werden.

Es wird ein Verfahren bevorzugt, bei dem als Kettenwirkmaschine eine Raschelmaschine eingesetzt wird. Dabei bildet das Gewirk mit den der Raschelmaschine als Kettfäden zugeführten Drähte einen Winkel von etwa 170°, so daß hohe Faden- und Abzugskräfte, die zum Arbeiten einer festen Warenbahn aus stärkerem Material notwendig sind, eine geringe resultierende Kraftwirkung auf die Nadeln ausüben. Die Verwendung von Hilfsfäden ist dabei nicht erforderlich. Es kann aber, je nach Bindungsart und auf die Drähte wirkenden Kräften, nützlich sein, die Drähte mit einem flüssigen organischen Schmiermittel zu versehen.

Nachfolgend wird die Erfindung anhand von Ausführungsbeispieleen näher erläutert.

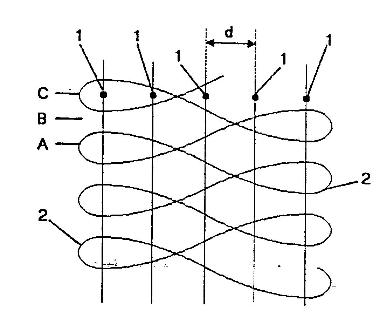

Die einzige Figur zeigt in schematischer Darstellung den Bewegungsablauf bei der Legung eines Drahtes zur Erzeugung eines erfindungsgemäßen Gewirks.

Die Bezugsziffern 1 sind jeweils den Nadeln einer Wirkmaschine zugeordnet, die um den Abstand d (die Nadelteilung der Wirkmaschine entspricht ebenfalls dem Wert d) voneinander entfernt sind. Nachfolgende Maschenreihen sind mit A, B, C bezeichnet. Eine von der Maschenreihe B ausgehende Fadenschleife 2 aus einem PtRh10-Draht wird derart um die Nadeln 1 der Wirkmaschine gelegt, daß sie mit einer Unterlegung von 4 Nadelteilungen d in die nächstfolgende, noch zu erstellende Maschenreihe C eingreift und sie mit der Maschenreihe B verbindet. Dieser Vorgang wird dann jeweils ausgehend von der gerade fertiggestellten Maschenreihe fortgesetzt.

### 1. Ausführungsbeispiel

Zur Herstellung eines Katalysator-Netzes für die Katalyse der Ammoniakverbrennung wird Draht aus Platin-Rhodium-Legierung mit einem Gewichtsanteil von 5% Rhodium und mit einem Durchmesser von 76 »m mittels einer Raschelmaschine verwirkt. Die Nadelteilung der Raschelmaschine wird hierzu auf 28 Maschen pro Zoll eingestellt. Die Drähte, an denen eine gleichmäßige Fadenkraft von ca. 80 mN angelegt wird, werden unter Ausbildung geschlossener Maschen mit einer Maschenlänge von 1,3 mm in Form einer Samt-Bindung gelegt.

Die erzeugte Bahnbreite beträgt 3,1 m, wobei das Gewirke ein Flächengewicht von 620 g/m² aufweist.

### 2. Ausführungsbeispiel

Zur Herstellung eines Netzes zur Katalyse bei der Blausäureherstellung wird ein Draht aus PtRh10 mit einem Durchmesser von 76 »m auf einem Kettenwirkautomat, dessen Nadelteilung auf eine Maschenzahl von 24 Maschen pro Zoll (24 Maschen pro 2.54 cm) eingestellt wird, unter Ausbildung geschlossener Maschen verwirkt. Dabei werden die Drähte, an die eine gleichmäßige Spannkraft in Höhe von ca. 90 mN angelegt ist, in Form einer Satin-Bindung gelegt. Es wird ein Netz mit einer Bahnbreite von ca. 2,2 m mit einem Flächengewicht von ca. 550 g/m² erzeugt.

## Patentansprüche

1. Gewirk aus edelmetallhaltigen Drähten, dadurch gekennzeichnet, daß die edelmetallhaltigen Drähte unter Ausbildung geschlossener Maschen verwirkt sind, wobei das Gewirk mindestens 14 Maschen pro Zoll (14 Maschen pro 2.54 cm) aufweist, und wobei bei mindestens einer der das Gewirk bildenden Maschenbindungen die Unterlegung der edelmetallhaltigen Drähte über mindestens 3 Maschenabstände (d) erfolgt.

2. Gewirk nach Anspruch 1, dadurch gekennzeichnet, daß es eine Maschenzahl im Bereich von 18 bis 32 Maschen pro Zoll (18 bis 32 Maschen pro 2.54 cm) aufweist.

3. Gewirk nach Anspruch 1 oder 2, dadurch gekennzeichnet, daß bei mindestens einer der das Gewirk bildenden Maschenbindungen die Unterlegung der edelmetallhaltigen Drähte über 4 Maschenabstände (d) erfolgt.

4. Gewirk nach einem der Ansprüche 1 bis 3, dadurch gekennzeichnet, daß es edelmetallhaltige Drähten mit einem Durchmesser im Bereich zwischen 50 »m und 200 »m enthält.

5. Verfahren für die maschinelle Herstellung gasdurchlässiger, gewirkter Netze aus edelmetallhaltigen Drähten mittels einer Wirkmaschine, dadurch gekennzeichnet, daß die edelmetallhaltigen Drähte mittels einer Kettenwirkmaschine, deren Nadelteilung so eingestellt wird, daß Gewirk mit mindestens 14 Maschen pro Zoll (14 Maschen pro 2.54 cm) erhalten wird, unter Ausbildung geschlossener Maschen verwirkt werden, wobei bei mindestens einer der das Gewirk bildenden Maschenbindungen die Unterlegung der edelmetallhaltigen Drähte über mindestens 3 Nadelteilungen (d) erfolgt.

6. Verfahren nach Anspruch 5, dadurch gekennzeichnet, daß die Drähte beim Wirken mit einer im wesentlichen gleichmäßigen Fadenkraft im Bereich zwischen 50 mN und 300 mN, bevorzugt zwischen 70 und 150 mN, gespannt werden.

7. Verfahren nach Anspruch 5 oder 6, dadurch gekennzeichnet, daß die Nadelteilung der Kettenwirkmaschine so eingestellt wird, daß Maschenware mit einer Maschenzahl im Bereich von 18 bis 32 Maschen pro Zoll (18 bis 32 Maschen pro 2.54 cm) erhalten wird.

8. Verfahren nach einem der Ansprüche 5 bis 7, dadurch gekennzeichnet, daß bei mindestens einer der das Gewirk bildenden Maschenbindungen die Unterlegung der edelmetallhaltigen Drähte über 4 Nadelteilungen (d) erfolgt.

9. Verfahren nach einem der Ansprüche 5 bis 8, dadurch gekennzeichnet, daß Drähte mit einem Durchmesser zwischen 50 »m und 200 »m eingesetzt werden.

10. Verfahren nach einem oder mehreren der Ansprüche 5 bis 9, dadurch gekennzeichnet, daß als Kettenwirkmaschine eine Raschelmaschine eingesetzt wird.

## Claims

1. A knitted fabric of wires containing precious metal, characterised in that the wires containing precious metal are knitted with the formation of closed stitches, in which the knitted fabric has at least 14 stitches per inch (14 stitches per 2.54 cm), and in which with at least one of the stitch links forming the knitted fabric, the underlaying of the wires containing precious metal takes place over at least three stitch spaces (d).

2. A knitted fabric according to Claim 1, characterised in that it has a stitch number in the range of 18 to 32 stitches per inch (18 to 32 stitches per 2.54 cm).

3. A knitted fabric according to Claim 1 or 2, characterised in that in the case of at least one of the stitch links forming the knitted fabric, the underlaying of the wires containing precious metal takes place over 4 stitch spaces (d).

4. A knitted fabric according to Claims 1 to 3, characterised in that it contains wires containing precious metal with a diameter in the range between 50 »m and 200 »m.

5. A method for the manufacture, by machine, of gas-permeable, knitted nets of wires containing precious metal, by means of a knitting machine, characterised in that the wires containing precious metal are knitted by means of a chain knitting machine, the needle spacing of which is set such that knitted fabric with at least 14 stitches per inch (14 stitches per 2.54 cm) is obtained, with the formation of closed stitches, in which in the case of at least one of the stitch links forming the knitted fabric, the underlaying of the wires containing precious metal takes place over at least 3 needle spaces (d).

6. A method according to Claim 5, characterised in that the wires are tensioned during knitting with a substantially uniform thread force in the range of between 50 mN and 300 mN, preferably between 70 and 150 mN.

7. A method according to Claim 5 or 6, characterised in that the needle spacing of the chain knitting machine is set such that mesh material with a stitch number in the range of 18 to 32 stitches per inch (18 to 32 stitches per 2.54 cm) is obtained.

8. A method according to one of Claims 5 to 7, characterised in that in the case of at least one of the stitch links forming the knitted fabric, the underlaying of the wires containing precious metal takes place over 4 needle spaces (d).

9. A method according to one of Claims 5 to 8, characterised in that wires with a diameter between 50 »m and 200 »m are used.

10. A method according to one or more of Claims 5 to 9, characterised in that a double-rib machine is used as chain knitting machine.

## Revendications

1. Tricot en fils contenant des métaux nobles, caractérisé en ce que les fils contenant des métaux nobles sont tricotés en formant des mailles fermées, le tricot présentant au moins 14 mailles par pouce (14 mailles par 2,54 cm) et le jeté sous des fils contenant des métaux nobles s'effectuant sur au moins trois écartements de mailles (d) dans au moins une des armures mailiées formant le tricot.

2. Tricot selon la revendication 1, caractérisé en ce qu'il présente un nombre de mailles de l'ordre de 18 à 32 mailles par pouce (18 à 32 mailles par 2,54 cm).

3. Tricot selon la revendication 1 ou 2, caractérise, en ce que le jeté sous des fils contenant des métaux nobles s'effectue sur quatre ecartements de mailles (d) dans au moins une des armures mailiées formant le tricot.

4. Tricot selon l'une des revendications 1 à 3, caractérisé en ce qu'il contient des fils contenant des métaux nobles ayant des diamètres de l'ordre de 50 »m à 200 »m.

5. Procédé de fabrication mécanique de toiles tricotées, perméables au gaz, en fils contenant des métaux nobles, au moyen d'un métier à tricoter, caractérisé en ce que les fils contenant des métaux nobles sont tricotés à l'aide d'un métier à tricoter chaîne dont l'écartement des aiguilles est réglé de telle sorte qu'on obtient un tricot présentant au moins 14 mailles par pouce (14 mailles par 2,54 cm), en formant des mailles fermées, le jeté sous des fils contenant des métaux nobles s'effectuant sur au moins trois écartements des aiguilles (d) dans au moins une des armures mailiées formant le tricot.

6. Procédé selon la revendication 5, caractérisé en ce que les fils au cours du tricotage sont tendus par une force de fil sensiblement régulière de l'ordre de 50 mN à 300 mN, de préférence de 70 à 150 mN.

7. Procédé selon la revendication 5 ou 6, caractérisé en ce que l'écartement des aiguilles du métier à tricoter chaîne est réglé de telle sorte qu'on obtient un produit maillé ayant un nombre de mailles de l'ordre de 18 à 32 mailles par pouce (18 à 32 mailles par 2,54 cm).

8. Procédé selon l'une des revendications 5 à 7, caractérisé en ce que le jeté sous des fils contenant des métaux nobles s'effectue sur au moins quatre écartements des aiguilles (d) dans au moins une des armures maillées formant le tricot.

9. Procédé selon une des revendications 5 à 8, caractérisé en ce qu'on utilise des fils de diamètre compris entre 50 »m et 200 »m.

10. Procédé selon une ou plusieurs des revendications 5 à 9, caractérisé en ce qu'on utilise un métier Rachel comme métier à tricoter chaîne.
